# EUROPEAN PATENT APPLICATION

(11) **EP 4 683 300 A1**
(43) Date of publication of application: **21.01.2026**
(21) Application number: 24777415.1
(22) Date of filing: 09.01.2024
(51) Int. Cl.: H04L 61/5007

(54) **INTERNET PROTOCOL (IP) ADDRESS ASSIGNMENT METHOD AND ADDRESS ASSIGNMENT SYSTEM**

(30) Priority: 29.03.2023 CN 202310323110
(71) Applicant: Huawei Cloud Computing Technologies Co., Ltd., Guiyang, Guizhou 550025 (CN)
(72) Inventor: LIN, Lingqing, Guiyang, Guizhou 550025 (CN); SONG, Deqiang, Guiyang, Guizhou 550025 (CN); YAN, Hongwei, Guiyang, Guizhou 550025 (CN)
(74) Representative: Körber, Martin Hans
(86) International application number: PCT/CN2024/071278
(87) International publication number: WO 2024/198619

(57) **Abstract**

This application discloses an internet protocol IP address assignment method and an address assignment system, and belongs to the field of network technologies. The method provided in this application is applied to the address assignment system. A cloud platform in the address assignment system can forward, to a target RDSH in the system, a first creation request sent by a first client; the target RDSH assigns, to a first session corresponding to the first client, a first IP address obtained through virtualization based on an IP address of the target RDSH; the RDSH returns the first IP address to the cloud platform; and the cloud platform returns a first access response to the first client. Based on this, an IP virtualization function is implemented in a public cloud service, and the RDSH can assign, to clients, a plurality of IP addresses obtained through virtualization, so that different clients obtain network services based on different IP addresses when accessing a same RDSH, thereby ensuring security, privacy, and scalability of the network services.

## Description

This application claims priority to Chinese Patent Application No. 202310323110.0, filed with the China National Intellectual Property Administration on March 29, 2023 and entitled "INTERNET PROTOCOL IP ADDRESS ASSIGNMENT METHOD AND ADDRESS ASSIGNMENT SYSTEM", which is incorporated herein by reference in its entirety.

### TECHNICAL FIELD

This application relates to the field of network technologies, and in particular, to an IP address assignment method and an address assignment system.

### BACKGROUND

Remote desktop protocol (remote desktop protocol, RDP) is a protocol that allows users to use, via a local device, terminal services provided by a remote device. The users accesses a remote desktop session host (remote desktop session host, RDSH) running on the remote device through the RDP, and the RDSH creates a remote desktop session (remote desktop session, RDS) for the users, so that the users can run applications, save files, access other networks, and the like on the RDSH through the RDS. To distinguish between different remote desktop sessions (RDS), related technologies adopt dynamic host configuration protocol (dynamic host configuration protocol, DHCP) to assign different internet protocol (internet protocol, IP) addresses to different RDSs. When a user accesses the RDSH, the RDSH creates a corresponding RDS and applies for an IP address from a DHCP server (DHCP Daemon, DHCPD). This technology is also known as a remote desktop IP virtualization (remote desktop IP virtualization) function.

However, the foregoing solution can be applied only to a network supporting DHCP, for example, a local area network or some networks on a private cloud, and cannot function on network platforms in a public cloud (Public Cloud) mode. This is because, a public cloud platform, to ensure security of network services, uniformly manages resources such as IP addresses by using a virtual private cloud (virtual private cloud, VPC) deployed on a public cloud. As a result, a server in a current DHCP architecture does not have permission to apply for and maintain IP addresses, making remote desktop IP virtualization unachievable. The inability to implement remote desktop IP virtualization on the public cloud means that security, privacy, and scalability of the services cannot be ensured when users use various public cloud services. Therefore, there is an urgent need for a method for implementing remote desktop IP virtualization in the public cloud mode is urgent.

### SUMMARY

This application provides an IP address assignment method, an address assignment system, a computing device cluster, and a storage medium, to implement remote desktop IP virtualization in a public cloud mode, and ensure security, privacy, and scalability of a public cloud service. The technical solutions are as follows:
According to a first aspect, an IP address assignment method is provided. The method is applied to an address assignment system, the address assignment system includes a cloud platform and a remote desktop session host RDSH, and the cloud platform is configured to provide a public cloud service. The method includes:
The cloud platform receives a first creation request sent by a first client, and forwards the first creation request to a target RDSH, where the first creation request is used to request to establish a first session with the target RDSH;
in response to the first creation request, the target RDSH assigns a corresponding first IP address to the first session, where the first IP address is obtained through virtualization of an IP address of the target RDSH;
the target RDSH returns the first IP address to the cloud platform; and
the cloud platform returns a first access response to the first client, where the first access response indicates that the first client has established the first session with the target RDSH based on the first IP address.

The IP address assignment method provided in this application can be applied to a public cloud service, and implements remote desktop IP virtualization in the public cloud service, so that when a client accesses the RDSH on the cloud platform, the RDSH can assign an IP address to the client 7based on a plurality of IP addresses obtained through virtualization. In this way, different clients can use different IP addresses to obtain network services through a same RDSH, thereby ensuring security, privacy, and scalability of the network services.

In a possible implementation, the method further includes:
The cloud platform receives a second creation request sent by a second client, and forwards the second creation request to the target RDSH, where the second creation request is used to request to establish a second session with the target RDSH;
in response to the second creation request, the target RDSH assigns a corresponding second IP address to the second session, where the second IP address is obtained through virtualization of an IP address of the target RDSH;
the target RDSH returns the second IP address to the cloud platform; and
the cloud platform returns a second access response to the second client, where the second access response indicates that the second client has established the second session with the target RDSH based on the second IP address.

According to the IP address assignment method provided in this application, for different clients using a same RDSH, the RDSH may assign, to different sessions corresponding to different clients, different IP addresses obtained through virtualization, so that different clients can use different IP addresses to obtain a network service. Therefore, when different clients obtain the network service using the same RDSH, different IP addresses may be presented, to ensure security, privacy, and scalability of obtaining the network service by different clients in the same RDSH.

In a possible implementation, the method further includes:
The cloud platform provides a target function switch on a management interface, where the target function switch is used to enable and disable an IP virtualization function for the target RDSH, and the IP virtualization function includes: enabling the RDSH to use a plurality of IP addresses obtained through virtualization based on IP addresses of the RDSH.

According to the foregoing technical solution, the switch of the IP virtualization function is provided for a user on a front-end interface, so that the user can configure the IP virtualization function in a process of creating an RDSH based on a service requirement.

In a possible implementation, the method further includes:
In response to obtaining first specification information for the target RDSH from the management interface of the cloud platform, in a process of creating the target RDSH, the cloud platform obtains, based on the first specification information, at least one IP address obtained through virtualization of an IP address of the target RDSH, and sends, to the target RDSH, the at least one IP address obtained through virtualization, where the first specification information indicates at least one of the following: a quantity of IP addresses used by the target RDSH and a quantity of sessions supported by the target RDSH; and
in response to an IP update instruction, the cloud platform obtains, based on second specification information carried in the IP update instruction, an updated version of at least one IP address obtained through virtualization based on an IP address of the target RDSH, and sends, to the target RDSH, the updated IP address, where the second specification information indicates at least one of the following: a quantity of updated IP addresses used by the target RDSH and a quantity of updated sessions supported by the target RDSH.

Based on this, the cloud platform can release a redundant IP address in a timely manner, and supplement an available IP address for the RDSH in a timely manner, thereby improving real-time performance of IP resource management.

In a possible implementation, that the cloud platform obtains, based on the second specification information carried in the IP update instruction, the updated IP address of the target RDSH includes:
comparing a first quantity currently available for the target RDSH with a second quantity indicated by the second specification information; and
when the second quantity is less than the first quantity, determining an IP address released this time, and obtaining, based on the IP address released this time, the updated version of the at least one IP address obtained through virtualization; or
when the second quantity is greater than the first quantity, determining a virtualized IP address that is newly applied for this time, and obtaining, based on the virtualized IP address that is newly applied for this time, the updated version of the at least one IP address obtained through virtualization.

According to the foregoing solution, on the management interface provided by the cloud platform, the user may configure a quantity of sessions when creating the RDSH. This effectively integrates the IP virtualization function into an actual service scenario.

In a possible implementation, the method further includes at least one of the following:
The cloud platform triggers the IP update instruction in response to obtaining the second specification information for the target RDSH from the management interface of the cloud platform; and
the cloud platform triggers the IP update instruction in response to detecting that usage of the target RDSH on the cloud platform meets an update condition.

In the foregoing technical solution, an IP address source is dynamically updated for each RDSH, and an active update initiation manner and a passive update initiation manner are provided, so that scenarios such as a product change on a business side and availability maintenance on a service side can be covered, and RDSH-based deployment flexibility and network service availability are greatly improved.

In a possible implementation, the method further includes:
In response to a deregistration request of the first client for the first session, the target RDSH releases the first IP address assigned to the first session.

In a possible implementation, the method further includes:
In response to a network service request initiated by the first client through the first session, the target RDSH processes the network service request based on the first IP address.

Based on this, in this application, session-level IP address isolation can be implemented, network requests of different users can be effectively distinguished, and privacy of using network services by different users can be ensured.

The cloud platform can maintain an IP address source assigned to each RDS, so that each RDSH can assign, reclaim, and reuse IP addresses. When programs in different sessions in a same RDSH listen to a network interface card port of the RDSH host, unique virtualized IP addresses are assigned to different sessions to effectively avoid port listening conflicts caused by only one available IP address of the network interface card. In conclusion, the technical solutions of this application can effectively improve IP address assignment efficiency, and greatly improve scalability of providing a network service based on the RDSH.

According to a second aspect, an address assignment system is provided. The address assignment system includes a cloud platform and a remote desktop session host RDSH. The cloud platform is configured to provide a public cloud service. The cloud platform is configured to: receive a first creation request sent by a first client, and forward the first creation request to a target RDSH, where the first creation request is used to request to establish a first session with the target RDSH.

The target RDSH is configured to assign a corresponding first IP address to the first session in response to the first creation request, where the first IP address is obtained through virtualization of an IP address of the target RDSH.

The target RDSH is configured to return the first IP address to the cloud platform.

The cloud platform is configured to return a first access response to the first client, where the first access response indicates that the first client has established the first session with the target RDSH based on the first IP address.

In a possible implementation, the cloud platform is further configured to: receive a second creation request sent by the second client, and forward the second creation request to the target RDSH, where the second creation request is used to request to establish the second session with the target RDSH.

The target RDSH is further configured to assign a corresponding second IP address to the second session in response to the second creation request, where the second IP address is obtained through virtualization of an IP address of the target RDSH.

The target RDSH is further configured to return the second IP address to the cloud platform.

The cloud platform is further configured to return a second access response to the second client, where the second access response indicates that the second client has established the second session with the target RDSH based on the second IP address.

In a possible implementation, the cloud platform is further configured to provide a target function switch on a management interface, where the target function switch is used to enable and disable an IP virtualization function for the target RDSH, and the IP virtualization function includes: enabling the RDSH to use a plurality of IP addresses obtained through virtualization based on IP addresses of the RDSH.

In a possible implementation, the cloud platform is further configured to: in response to obtaining first specification information for the target RDSH from the management interface of the cloud platform, in a process of creating the target RDSH, obtain an IP address of the target RDSH based on the first specification information, and send the IP address to the target RDSH, where the first specification information indicates at least one of the following: a quantity of IP addresses of the target RDSH and a quantity of sessions supported by the target RDSH.

The cloud platform is further configured to: in response to an IP update instruction, obtain, based on second specification information carried in the IP update instruction, an updated IP address of the target RDSH, and send, to the target RDSH, the updated IP address, where the second specification information indicates at least one of the following: a quantity of updated IP addresses used by the target RDSH, and a quantity of updated sessions supported by the target RDSH.

In a possible implementation, the cloud platform is configured to:
compare a first quantity currently available for the target RDSH with a second quantity indicated by the second specification information; and
when the second quantity is less than the first quantity, determine an IP address released this time, and obtain the updated IP address based on the IP address released this time; or
when the second quantity is greater than the first quantity, determine a virtualized IP address that is newly applied for this time, and obtain the updated IP address based on the virtualized IP address that is newly applied for this time.

In a possible implementation, the cloud platform is configured to perform at least one of the following:

The cloud platform triggers the IP update instruction in response to obtaining the second specification information for the target RDSH from the management interface of the cloud platform; and
the cloud platform triggers the IP update instruction in response to detecting that usage of the target RDSH on the cloud platform meets an update condition.

In a possible implementation, the target RDSH is further configured to:
in response to a deregistration request of the first client for the first session, release the first IP address assigned to the first session.

In a possible implementation, the target RDSH is further configured to:
in response to a network service request initiated by the first client through the first session, process the network service request based on the first IP address.

According to a third aspect, a computing device cluster is provided, including at least one computing device. Each computing device includes a processor and a memory. A processor of the at least one computing device is configured to execute instructions stored in a memory of the at least one computing device, to cause the computing device cluster to perform the IP address assignment method provided in the first aspect.

According to a fourth aspect, a computer-readable storage medium is provided, including computer program instructions. When the computer program instructions are executed by a computing device cluster, the computing device cluster performs the IP address assignment method provided in the first aspect.

According to a fifth aspect, a computer program product including instructions is provided. When the instructions included in the computer program product are run by a computing device cluster, the computing device cluster is caused to perform the IP address assignment method provided in the first aspect.

### BRIEF DESCRIPTION OF DRAWINGS

FIG. 1 is a diagram of assigning an IP address to a remote desktop session based on a DHCP protocol in a related technology according to an embodiment of this application;
FIG. 2 is a diagram of an implementation environment according to an embodiment of this application;
FIG. 3 is a diagram of a management interface according to an embodiment of this application;
FIG. 4 is a diagram of initialization setting of a cloud platform according to an embodiment of this application;
FIG. 5 is a diagram of a principle of creating an RDSH according to an embodiment of this application;
FIG. 6 is a schematic flowchart of delivering an IP address when an RDSH is created according to an embodiment of this application;
FIG. 7 is a diagram of an IP address assignment method according to an embodiment of this application;
FIG. 8 is a diagram of using a network service by a client according to an embodiment of this application;
FIG. 9 is a schematic flowchart of session deregistration according to an embodiment of this application;
FIG. 10 is a diagram of updating an IP address according to an embodiment of this application;
FIG. 11 is a diagram of another management interface according to an embodiment of this application;
FIG. 12 is a schematic flowchart of updating an IP address according to an embodiment of this application;
FIG. 13 is a diagram of an address assignment system according to an embodiment of this application;
FIG. 14 is a diagram of a hardware structure of a computing device according to an embodiment of this application; and
FIG. 15 is a diagram of a computing device cluster according to an embodiment of this application.

### DESCRIPTION OF EMBODIMENTS

To make the objectives, technical solutions, and advantages of this application clearer, the following further describes implementations of this application in detail with reference to accompanying drawings.

Before the technical solutions provided in embodiments of this application are described, the following first describes terms in this application.

An internet protocol (internet protocol, IP) address is an identifier assigned to a device upon access of the device to a network. Devices can communicate with each other through IP addresses. IP addresses may be used to identify which device is a sender and which device is a receiver.

A cloud platform, short for a cloud computing platform, can provide cloud services such as computing, networks, and storage based on massive hardware and software resources. The cloud platform remotely processes and analyzes massive data by using a network "cloud" and returns the data to users, and features scalability, distributed nature, virtualization, high availability, scalability, on-demand services, and security. The cloud platform can quickly provision and release configurable computing resources at low management costs or with low complexity of interaction between the users and a service provider. OpenStack is a cloud platform with an infrastructure as a service (infrastructure as a Service, IAAS) architecture, and provides a cloud operating system for managing a large quantity of resource pools in an entire data center. Administrators may manage an entire cloud system through a console of the cloud platform, and provide available cloud resources for the users through web interfaces.

A public cloud (Public Cloud) is a cloud infrastructure used by the general public or large industries collectively, that is, a cloud platform accessed through a public network. Organizations with public clouds can provide users with an ability to deploy and use cloud services on demand through leasing. The users can access the public clouds through public networks (such as the Internet) to use various network services provided by the public clouds, including but not limited to computing, storage, and networks.

A virtual private cloud (virtual private cloud, VPC) is an isolated and private virtual network environment on a cloud platform. Users can freely configure subservices such as IP address segments, subnets, and security groups on the virtual private cloud.

An elastic cloud server (elastic cloud server, ECS) is a basic computing component including a CPU, a memory, an operating system, and an EVS disk, and can be obtained at any time and expanded elastically.

A cloud service (Cloud Service) is a service that is obtained through a network in an on-demand and easy-to-expand manner. The service may be a service related to a network technology, software, and the internet, or may be another service.

A network interface card (network interface card, NIC), also known as a network interface controller, is a type of computer hardware that allows computers to communicate on a computer network.

A network proxy (proxy) is a special network service that allows a terminal to indirectly connect to another terminal through the service. Some network devices such as gateways and routers have a network proxy function. It is generally considered that a proxy service helps ensure privacy or security of a network terminal, and can prevent network attacks to some extent.

A remote desktop protocol (remote desktop protocol, RDP) is a protocol that allows a user to use, via a local device, a terminal service provided by a remote device.

A remote desktop session host (remote desktop session host, RDSH) can store an application and a desktop that are based on a remote desktop session (remote desktop session, RDS) and that are shared with a user.

A remote desktop session (RDS) is started when a user logs in to a remote desktop session host (RDSH).

Remote desktop IP virtualization (remote desktop IP virtualization): After IP virtualization is configured and enabled on a remote desktop session host (RDSH), a unique IP address is assigned to and used in a remote desktop session.

A dynamic host configuration protocol (dynamic host configuration protocol, DHCP) is a communication protocol that enables a network administrator to centrally manage and automatically assign IP network addresses. In an IP network, each device connected to the internet (Internet) needs to be assigned a unique IP address. The dynamic host configuration protocol enables the network administrator to monitor and assign IP addresses from a central node. When a computer is moved to another location in the network, the computer can automatically receive a new IP address.

A dynamic host configuration protocol server (DHCP Daemon) is a type of management software that is oriented to a network administrator and that implements a dynamic host configuration protocol (DHCP).

A dynamic host configuration protocol client (DHCP Client Daemon) is a type of client software that is oriented to a host and that implements a dynamic host configuration protocol (DHCP).

The following describes an application scenario of the technical solutions of this application.

This application provides a method for providing an IP address for a remote desktop session. The method can be applied to a cloud platform, and assign different IP addresses to different remote desktop sessions running on a remote desktop session host on the cloud platform.

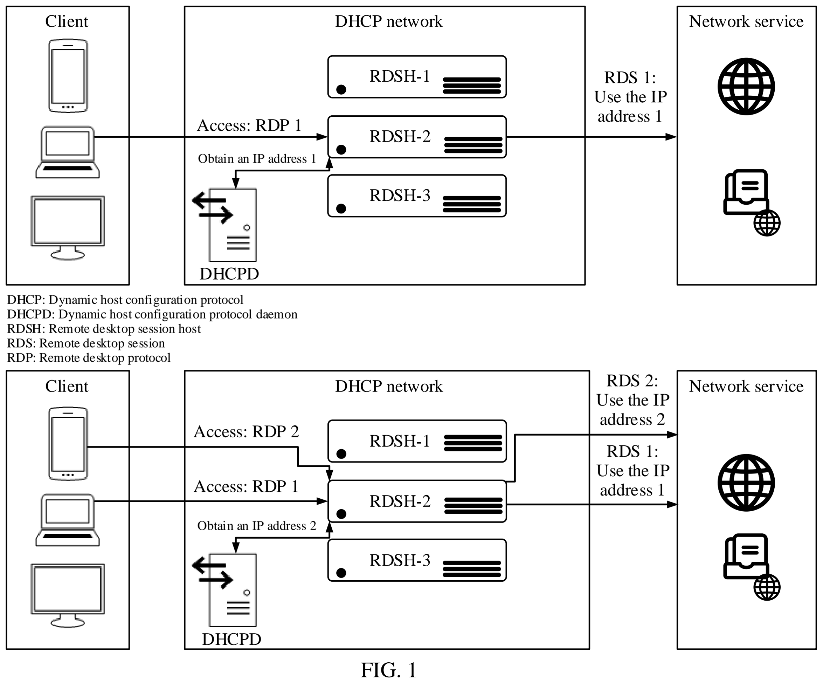

In a related technology, a DHCP is used to dynamically assign IP addresses to different sessions in a remote desktop session host. FIG. 1 is a diagram of assigning IP addresses to remote desktop sessions based on the DHCP protocol in the related technology. When a client accesses an RDSH, for example, an RDSH 2, the client establishes a connection (indicated by an RDP 1) to the RDSH 2, and the RDSH 2 creates an RDS 1 and sends a DHCP request to a DHCP network (usually a local area network) in which the RDSH 2 is located. After receiving the DHCP request, a DHCPD in the local area network assigns an IP address 1 to the RDS 1, and the client uses the IP address 1 to enjoy a network service. A process of assigning an IP address 2 to an RDS 2 corresponding to another client is similar. The foregoing process is based on that the DHCPD can centrally manage IP addresses in the network.

However, in a public cloud mode, the DHCP cannot be used to implement IP virtualization for remote desktop sessions. Reasons are as follows:
In one aspect, the DHCPD cannot obtain permission to manage IP addresses on the cloud platform. To ensure security of cloud services, a management plane of the cloud platform, for example, a virtual private cloud (virtual private cloud, VPC) deployed on a public cloud, centrally manages resources such as IP addresses of the cloud platform. As a result, the DHCP server in a current DHCP architecture does not have permission to apply for and maintain IP addresses.

In another aspect, the DHCP is applicable only to IP management in a local network, and is difficult to be applied to the cloud platform. In the public cloud mode, massive resources at the bottom layer are abstracted and provided for users in a form of cloud services. Hosts/virtual machines/containers actually used to implement cloud services may be distributed across networks, for example, distributed in different regions. Different regions may further include one data center network or a plurality of data center networks that are geographically close to each other. However, the current DHCP architecture is only applicable to management of IP resources in the local area network, and cannot ensure real-time dynamic assignment and release of IP addresses on a huge public cloud. For example, after a DHCP request sent by a client is received by a nearest DHCPD (inside a network), the DHCP request is processed, and it is difficult to transmit the DHCP request to a next network across networks. Consequently, it is difficult to dynamically assign IP addresses on the public cloud.

In conclusion, the current DHCP technology cannot be used to implement remote desktop IP virtualization on the public cloud.

In view of this, this application provides an IP address assignment method. The method can be applied to a cloud platform that provides a public cloud service, and can implement remote desktop IP virtualization for the cloud platform, so that when different clients access an RDSH on the cloud platform, the RDSH assigns different IP addresses obtained through virtualization to different sessions corresponding to different clients, so that different clients can obtain network services based on different IP addresses. Therefore, when a client accesses a session in the RDSH to use various network services provided by the cloud platform, security, privacy, and scalability of the network services can be fully ensured.

The following further describes the technical solutions of this application.

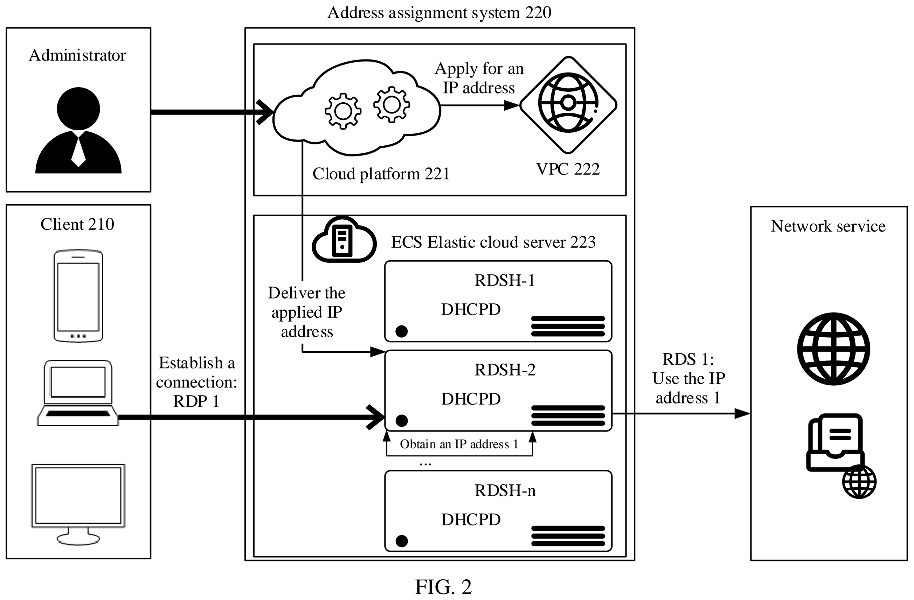

An embodiment of this application provides a diagram of an implementation environment. FIG. 2 is a diagram of an implementation environment according to an embodiment of this application. The implementation environment includes a client 210 and an address assignment system 220.

In this application, a technology that provides a remote session in a cloud host for a client is also referred to as a cloud desktop, and an RDSH running on a public cloud may also be referred to as a remote desktop session host instance of the cloud desktop. Refer to FIG. 2. The address assignment system 220 includes a cloud platform 221. The cloud platform 221 is configured to provide an IP virtualization function on the public cloud.

A VPC 222 running in the address assignment system 220 is configured to maintain resources such as IP addresses on the cloud platform. A VPC is a logically isolated network space defined on the public cloud. All resources on the public cloud, such as cloud hosts and load balancers, can be hosted on the VPC. An administrator may use the VPC to customize network segments, IP addresses, and routing policies.

In some embodiments, the address assignment system 220 includes an elastic cloud server 223. The elastic cloud server 223 is configured to run at least one RDSH instance. Refer to an RDSH 1 to an RDSH-n in FIG. 2, where n is a quantity of RDSHs, and n is greater than or equal to 1. The elastic cloud server 223 is a basic computing component of the cloud platform, and the address assignment system 220 can provide the elastic cloud server 223 for a user as required.

The client 210 is configured to: access the address assignment system 220, access an RDSH on the cloud platform, and use various remote network services based on an RDS in the RDSH, for example, run an application program, download a file, or access a network (which may be accessing an intra-cloud network or accessing an external network).

The foregoing administrator is a user who manages the RDSH running on the cloud platform. In some embodiments, the administrator creates a target RDSH based on the public cloud through a management interface provided by the cloud platform in which the administrator is located, and configures an IP virtualization function for the created target RDSH. The cloud platform 221 applies for one or more IP addresses from the VPC 222 based on a configuration of the administrator, and sends the one or more IP addresses to the target RDSH. When receiving a first creation request of a first client, the target RDSH creates a first session corresponding to the first client, and assigns a first IP address to the first session from a plurality of maintained IP addresses. The plurality of IP addresses obtained by the cloud platform from the VPC are obtained through virtualization based on IP addresses of the RDSH. When accessing a session in the RDSH, the client 210 may perform network communication based on a virtualized IP address assigned by the RDSH to the session.

In some embodiments, refer to FIG. 2. A standalone DHCPD is installed on the RDSH in the address assignment system 220. The DHCPD is a type of management software that is oriented to the administrator and that supports a dynamic host configuration protocol (DHCP). Based on this, the RDSH on the cloud platform 221 can dynamically manage a plurality of IP addresses in a single machine by using the DHCPD.

Certainly, the technical solutions of this application may also be applied to a cloud platform in another mode, for example, a hybrid cloud deployed in combination with a private cloud and a public cloud. This is not limited in this application.

In this embodiment of this application, the address assignment system 220 may be implemented based on a computing device cluster, and the computing device cluster includes at least one computing device. In some embodiments, the computing device cluster may be a server cluster or a distributed file system including a server and a plurality of physical servers, or a cloud server cluster that provides basic cloud computing services such as cloud storage, cloud services, cloud databases, cloud computing, cloud functions, network services, cloud communication, middleware services, domain name services, security services, content delivery networks (content delivery network, CDN), big data, and artificial intelligence platforms. This is not limited in this application.

In this embodiment of this application, the client 210 runs on a computing device. The computing device is a terminal or a server. The terminal is, for example, a desktop computer, a notebook computer, or a smartphone. The server is, for example, a central server, an edge server, or a local server in a local data center. This is not limited in this application. The same applies to a client in which the foregoing administrator is located. In some embodiments, a terminal in which the administrator is located and a computing device that accesses an RDS may be a same device or different devices. This is not limited in this application.

In some embodiments, the IP address assignment method provided in this application can be implemented in the address assignment system 220 in a form of a computing instance. The computing instance can run on a public cloud in a form of a virtual machine, a container, or a process, and is provided for a user as a cloud service.

The client 210 and the address assignment system 220 may be communicatively connected through a wired network or a wireless network. In some embodiments, the wireless network or the wired network uses a standard communication technology and/or protocol. The network includes but is not limited to any combination of a data center network (data center network), a storage area network (storage area network, SAN), a local area network (local area network, LAN), a metropolitan area network (metropolitan area network, MAN), a wide area network (wide area network, WAN), a mobile, wired, or wireless network, a private network, or a virtual private network. In some implementations, technologies and/or formats including a hypertext markup language (hypertext markup language, HTML), an extensible markup language (extensible markup language, XML), and the like are used to represent data exchanged through the network. In addition, all or some links can be encrypted by using conventional encryption technologies such as secure sockets layer (secure sockets layer, SSL), transport layer security (transport layer security, TLS), virtual private network (virtual private network, VPN), and network protocol security (internet protocol security, IPsec). In some other embodiments, customized and/or dedicated data communication technologies can alternatively be used to replace or supplement the foregoing data communication technology.

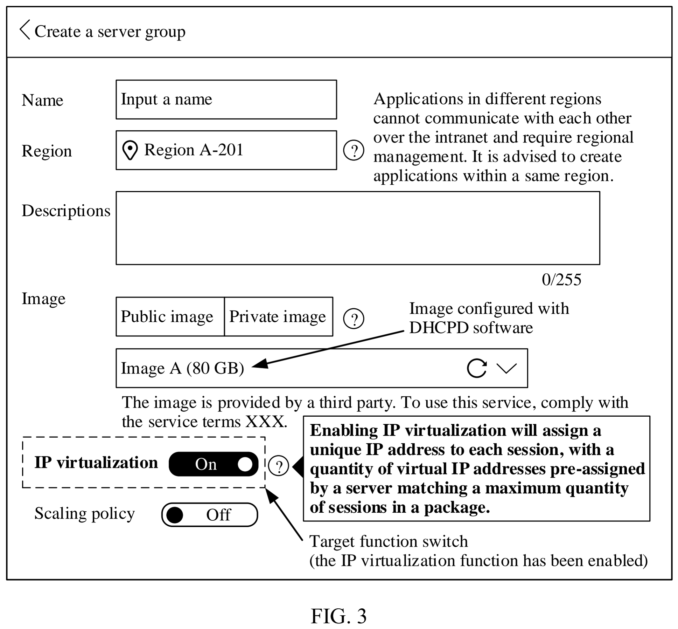

The following describes, based on the foregoing application scenario and the foregoing implementation environment, the IP address assignment method provided in embodiments in detail with reference to FIG. 3 to FIG. 12 provided below. The following uses interaction between a client and an address assignment system as an example for description.

Step 301 to step 307 below describe a brief procedure of assigning IP addresses to different remote desktop sessions RDSs used by different clients on a public cloud.

301: A cloud platform in the address assignment system creates a target RDSH in response to an RDSH creation instruction.

In some embodiments, the cloud platform provides a target function switch on a management interface, where the target function switch is used to enable and disable an IP virtualization function for the target RDSH, and the IP virtualization function includes: enabling the RDSH to use a plurality of IP addresses obtained through virtualization based on IP addresses of the RDSH. In some embodiments, the management interface of the cloud platform is also referred to as a console of the public cloud.

In some embodiments, an administrator creates and manages an RDSH on the cloud platform through the management interface provided by the cloud platform. The RDSH creation instruction may be triggered by the administrator. For example, the administrator logs in, via a terminal device, to the management interface provided by the cloud platform, and chooses to create the target RDSH on a target server. FIG. 3 is a diagram of a management interface according to this application. Refer to FIG. 3. The administrator logs in to the management interface provided by a public cloud platform, and starts to create an RDSH (which may be one RDSH or a group of RDSHs). The management interface provides an input option for editing a name of a server group to be created, and supports the administrator in selecting a region in which the target server group is located (which may be a data center divided by geographical region). The management interface provides a function of selecting an image, and a user may select a required image to create an RDSH. The management interface provides the target function switch. As shown in the figure, if the target function switch is on, an IP virtualization function can be applied to the created RDSH. The image provides an operating system, initialized application data, pre-installed software, and the like used by an RDSH instance. As shown in FIG. 3, the administrator may directly select an image pre-installed with a DHCPD.

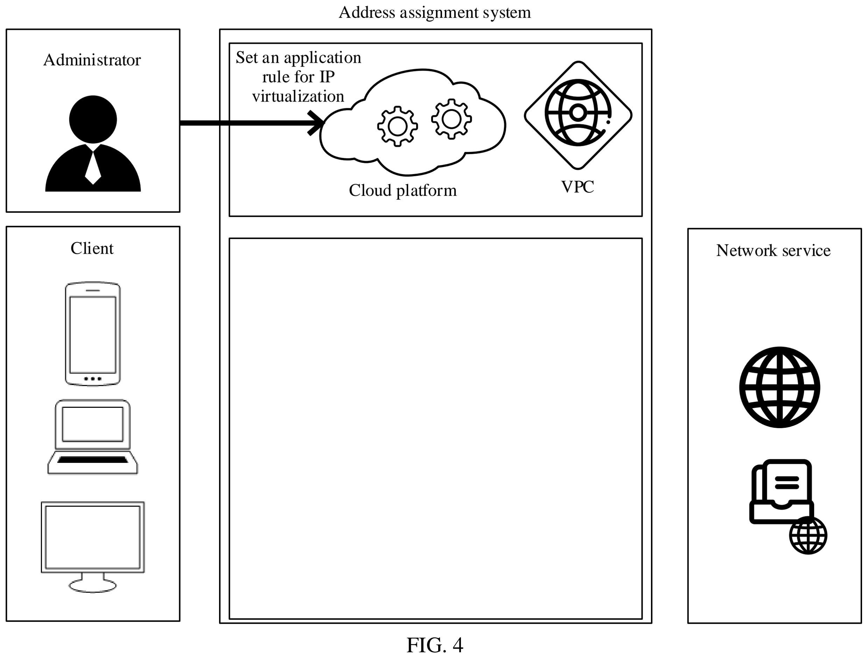

In some embodiments, the cloud platform supports presetting an application rule of the IP virtualization function of the RDSH, so that when the RDSH is created and the IP virtualization function is enabled, the IP virtualization function of the target RDSH may be enabled directly according to the preset application rule. In this way, the administrator can simply and efficiently create and manage RDSHs in a public cloud mode. The following provides descriptions with reference to FIG. 4. FIG. 4 is a diagram of initialization setting of a cloud platform. For an architecture of the cloud platform, refer to descriptions in FIG. 2.

In some embodiments, in an initial state, the cloud platform is ready, and the administrator has not set an application rule of an IP virtualization function of the RDSH on the cloud platform. The administrator logs in to a public cloud console (management interface) provided by the cloud platform, and sets the application rule for enabling remote desktop IP virtualization. The cloud platform stores and records the application rule set by the administrator, where the application rule can be applied to a newly created RDSH.

In some embodiments, the application rule indicates an object to which the IP virtualization function is applied, for example, a group of servers configured to run the RDSH, or a standalone server configured to run the RDSH. Correspondingly, the application rule may indicate to enable the IP virtualization function for all RDSH servers in a group, or indicate to enable the IP virtualization function for a selected standalone RDSH server.

According to the foregoing technical solution, the switch of the IP virtualization function is provided for a user on a front-end interface, so that the user can configure the IP virtualization function in a process of creating an RDSH based on a service requirement.

302: The cloud platform applies, based on the target RDSH, to a VPC for at least one IP address obtained through virtualization based on an IP address of the target RDSH.

In some embodiments, first specification information indicates a specification of an IP address related to the target RDSH. For example, the first specification information includes at least one of the following: a quantity of IP addresses used by the target RDSH, for example, 1 or 2; and a quantity of sessions supported by the target RDSH, for example, 2 or 3.

In some embodiments, in response to obtaining the first specification information from the management interface, the cloud platform obtains the at least one IP address obtained through virtualization based on the IP address of the RDSH. For example, the cloud platform obtains, based on the quantity that is of IP addresses and that is indicated by the first specification information, one or more IP addresses obtained through virtualization; or the cloud platform obtains, based on the quantity that is of sessions and that is indicated by the first specification information, one or more IP addresses that are obtained through virtualization and that support the quantity of sessions.

In some embodiments, the cloud platform can select, based on a request submitted by a user, a target physical host (for example, a server) to run the created target RDSH. A network interface card used for networking is installed on each physical host. An IP address configured for the network interface card when the network interface card is installed to the physical host is an IP address of the RDSH. In this example, the cloud platform requests, based on the IP address of the RDSH and the quantity indicated by the first specification information, the VPC to obtain, through virtualization based on the IP address of the RDSH, an IP address corresponding to the quantity. The IP address obtained through virtualization is bound to the IP address corresponding to the RDSH. For example, a plurality of IP addresses obtained through virtualization are bound to a network interface card corresponding to the RDSH, and are used as IP addresses equivalent to an original fixed IP address of the network interface card, so that a networking process of a virtual IP address is completed on a management plane of the public cloud. In some other embodiments, a relationship between a physical host, a network interface card, an IP address of the network interface card, and an IP address obtained through virtualization is maintained by the VPC.

Therefore, the plurality of IP addresses obtained through virtualization can implement a networking function equivalent to the original fixed IP address of the network interface card, and provide data support of the management plane of the public cloud for subsequent dynamic management of the plurality of IP addresses in the RDSH.

In some embodiments, the cloud platform may apply for one or more virtualized IP addresses for the target RDSH. For example, the cloud platform determines, based on the first specification information submitted by the user, to apply for an equal quantity of IP addresses, or the cloud platform applies for an equal quantity of IP addresses based on a product specification (for example, a quantity of sessions) set by the administrator when the administrator creates the target RDSH.

In some embodiments, the management interface of the cloud platform provides an option for specifying a region in which a cloud server is located. In other words, the administrator may select the region in which the cloud server used to create the target RDSH is located. In this example, the administrator selects the region in which the server is located, and submits the region to the cloud platform, to trigger the cloud platform to apply to the VPC for the IP address of the target RDSH. The VPC determines the IP address of the RDSH based on an available cloud server in the region selected by the administrator, and further applies for a corresponding quantity of virtualized IP addresses based on a requirement of the administrator for a quantity of sessions.

According to the foregoing solution, the management interface provided by the cloud platform allows the user to customize a quantity of sessions to be used when the RDSH is created. This effectively integrates the IP virtualization function into an actual service scenario.

303: The cloud platform sends, to the created target RDSH, the at least one IP address obtained through virtualization.

In some embodiments, a server DHCPD that supports a dynamic host configuration protocol runs in the target RDSH, and the cloud platform sends, to the standalone DHCPD running in the target RDSH, the at least one IP address obtained through virtualization. The DHCPD supports the DHCP protocol, and can maintain (for example, assign and reclaim) the plurality of IP addresses obtained through virtualization. Therefore, the plurality of virtualized IP addresses delivered by the cloud platform to the target RDSH are equivalent to an IP address source maintained and managed by the DHCPD.

According to the foregoing technical solution, at a granularity of a standalone RDSH, a plurality of assignable virtualized IP addresses are delivered to a standalone DHCPD running in the RDSH, to implement flexible management of a plurality of IP addresses in the standalone RDSH.

It should be noted that the foregoing process is described by using a process of creating a standalone RDSH as an example. When the administrator creates a plurality of RDSHs through one configuration, the cloud platform can execute an RDSH creation process and a virtualized IP address delivery process by using the same process as step 301 to step 303 above at a granularity of each RDSH.

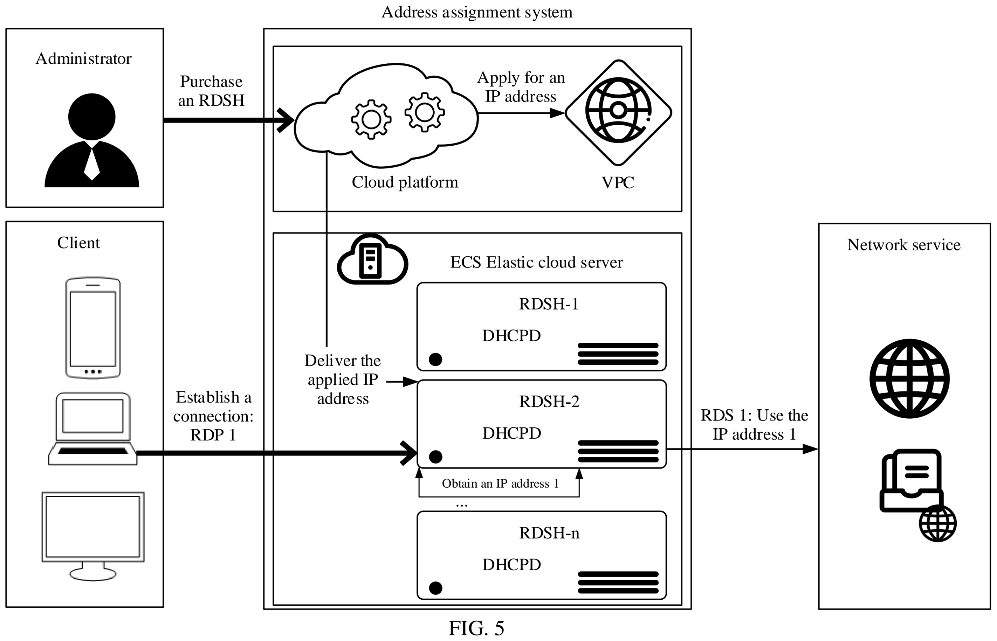

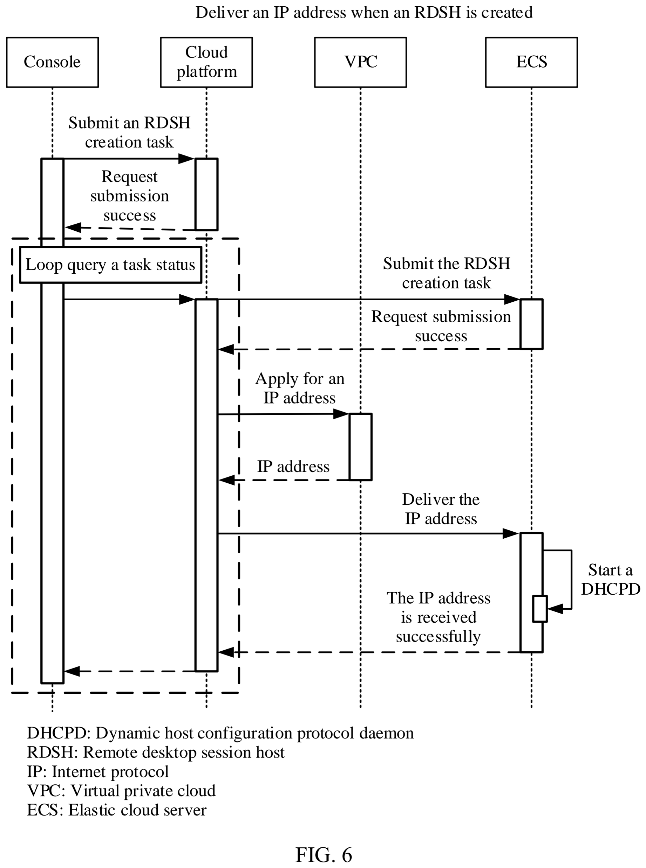

To facilitate understanding of the procedure described in step 301 to step 305 above, this application further provides FIG. 5 and FIG. 6. FIG. 5 is a diagram of a principle of creating an RDSH according to this application. FIG. 6 is a schematic flowchart of delivering an IP address when an RDSH is created according to this application. The following further describes the technical solutions provided in step 301 to step 303 above with reference to FIG. 5 and FIG. 6.

Refer to FIG. 5. In a scenario in which the administrator creates one or more RDSHs, the administrator logs in to the management interface (a public cloud console) provided by the cloud platform, selects a server group corresponding to a set rule for enabling remote desktop IP virtualization, and purchases one or more RDSHs (corresponding to one or more physical hosts). In a process of creating the RDSH, the cloud platform applies, at a granularity of a standalone RDSH, to the VPC for one or more IP addresses obtained through virtualization, and delivers the IP addresses obtained through virtualization to standalone DHCPDs installed in corresponding RDSHs.

Refer to FIG. 6. The administrator submits an RDSH creation task to the cloud platform through a public cloud console provided by the cloud platform. The cloud platform returns a task submission success response to the console, and submits the RDSH creation task to an elastic cloud server (ECS). After receiving a response returned by the ECS, the cloud platform applies to the VPC for virtualized IP addresses assigned to an RDSH, and delivers the received virtualized IP addresses to the RDSH. A standalone DHCPD in the RDSH receives and stores these virtualized IP addresses as an IP address source that can be used for assignment. The standalone DHCPD in the RDSH starts DHCP protocol listening, and provides a DHCP protocol support capability.

The foregoing step 301 to step 303 describe a process of creating an RDSH and a process of delivering a plurality of available virtualized IP addresses. The following describes a process of dynamically assigning an IP address when a client accesses an RDSH.

304: The cloud platform receives the first creation request sent by the first client, and forwards the first creation request to the target RDSH, where the first creation request is used to request to establish a first session with the target RDSH.

In some embodiments, the first creation request carries host information, and the cloud platform can determine the target RDSH based on the host information, to forward the first creation request to the target RDSH. The host information may be a host name, a host IP address, a subnet address of the host, or the like. This application is not limited thereto.

In some other embodiments, the cloud platform determines, for the first client according to a load balancing policy, a target RDSH host that provides an RDSH service.

305: In response to the first creation request, the target RDSH assigns a corresponding first IP address to the first session, where the first IP address is obtained through virtualization of an IP address of the target RDSH, and the RDSH assigns a virtual IP address to a running remote desktop session RDS based on a plurality of virtual IP addresses corresponding to the IP address.

In some embodiments, a server DHCPD that supports the dynamic host configuration protocol runs in the target RDSH. The DHCPD supports the DHCP protocol, and can maintain (for example, assign and reclaim) the plurality of IP addresses obtained through virtualization. The target RDSH sends a DHCP request to the DHCPD in response to the first creation request. The DHCPD assigns, in response to the DHCP request, the first IP address to the first session from the plurality of maintained virtualized IP addresses. In some embodiments, a unique session identifier is assigned to each session in one RDSH.

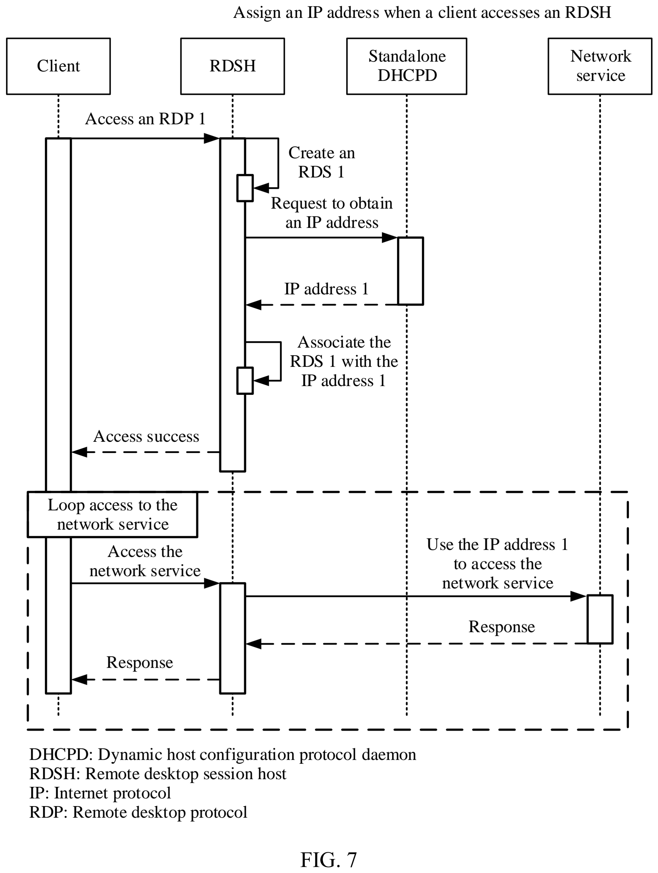

To facilitate understanding of step 304 and step 305, this application provides FIG. 7 based on FIG. 5. FIG. 7 is a flowchart of an IP address assignment method according to an embodiment of this application. Refer to FIG. 7 and FIG. 5. After sending the first creation request, the client accesses an RDSH through an RDP, and the RDSH marks a connection by using an RDP 1, creates a corresponding first session RDS 1, and associates the connection RDP 1 of the client with the first session RDS 1. The RDSH sends a DHCP request to apply for an IP address from a running DHCPD for the first session. The standalone DHCPD in the RDSH receives the request, responds to the request, and assigns a virtualized IP address 1. The RDSH obtains the IP address 1, and associates the RDS 1 with the IP address 1. Based on this, the first client may use the IP address 1 as an IP address used for subsequent access to a network service based on the first session RDS 1.

306: The target RDSH returns the first IP address to the cloud platform.

In some embodiments, the cloud platform may determine, based on the first IP address returned by the target RDSH, at what time, which client, through which session in which RDSH, uses the first IP address to perform network communication. Therefore, the cloud platform can effectively manage and trace a user of a remote desktop session. This ensures security of remote desktop sessions on the public cloud.

307: The cloud platform returns a first access response to the first client, where the first access response indicates that the first client has established the first session with the target RDSH based on the first IP address.

In some embodiments, the cloud platform returns an IP address (for example, a fixed IP address configured for a network interface card of a physical host) of the target RDSH to the first client, so that the first client can directly access the target RDSH based on the IP address. In some other embodiments, the target RDSH may alternatively return the first access response to the first client, so that the first client directly interacts with the accessed RDSH, thereby reducing forwarding and interaction overheads of the cloud platform.

Similar to the foregoing steps 304 to 307, a process in which the address assignment system assigns an IP address to a second client that uses the target RDSH includes: The cloud platform receives a second creation request sent by the second client, and forwards the second creation request to the target RDSH, where the second creation request is used to request to establish a second session with the target RDSH (referring to step 304); in response to the second creation request, the target RDSH assigns a corresponding second IP address to the second session, where the second IP address is obtained through virtualization of an IP address of the target RDSH (referring to step 305); the target RDSH returns the second IP address to the cloud platform (referring to step 306); and the cloud platform returns a second access response to the second client, where the second access response indicates that the second client has established the second session with the target RDSH based on the second IP address (referring to step 307).

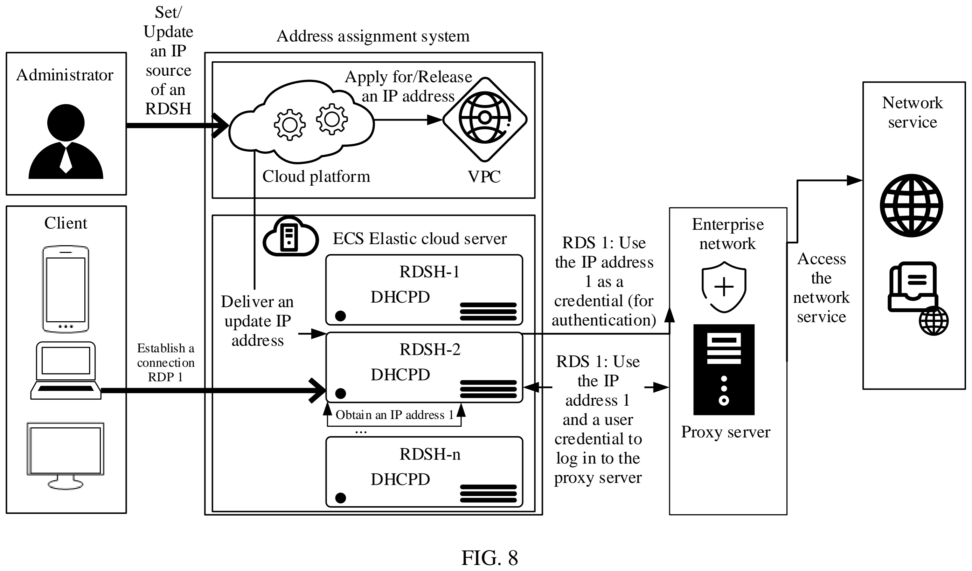

In some other embodiments, in response to a network service request initiated by the first client through the first session, the target RDSH processes the network service request based on the first IP address. For example, the network service request includes accessing a network by using proxy software. The following provides descriptions with reference to FIG. 8. FIG. 8 is a diagram of using a network service by a client according to this application.

Refer to FIG. 8. In a secure network access scenario controlled by an enterprise proxy server, a process in which a user A of an enterprise network uses proxy software to log in to the proxy server through a remote desktop session in an RDSH, to access an external network includes the following step (1) to step (5):
(1) The user A accesses, via a client, the RDSH through an RDP, where the RDP is marked as an RDP 1, the RDSH creates a corresponding RDS 1, and the RDSH sends a DHCP request to apply for an IP address.
(2) A standalone DHCPD in the RDSH receives the request, responds to the request, and assigns a virtualized IP address 1. The RDSH obtains the IP address 1, and associates the RDS 1 with the IP address 1. The user A can use the IP address 1 as an IP address for subsequent network communication via the client.
(3) The user A uses the proxy software running in the RDSH through the RDS 1, to request to log in to the proxy server of the enterprise network.
(4) The enterprise proxy server authenticates the IP address 1 and a user credential provided by the user A, and the enterprise proxy server records that authentication on the IP address 1 succeeds, and allows the user A to use the IP address 1 to access a network resource via the proxy server.
(5) The user A uses the authenticated IP address 1 to access the proxy server, to access the network resource via the proxy server.

After a similar process of step (1) to step (5), a user B uses an authenticated IP address 2 to access the proxy server, to access the network resource via the proxy server.

In the foregoing process, the user A and the user B can use network services based on different IP addresses without affecting each other.

Therefore, in this application, at least the following can be implemented: A client performs network access in a specified session of a specified RDSH based on a unique IP address in the RDSH; different clients perform network access in a same RDSH based on different IP addresses; and a same client uses different IP addresses in different sessions. Based on this, in this application, session-level IP address isolation can be implemented, network requests of different users can be effectively distinguished, and privacy of using network services by different users can be ensured.

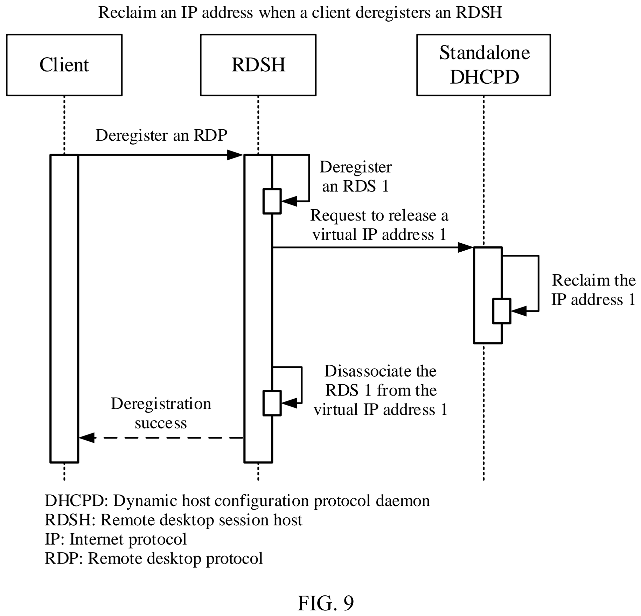

In some other embodiments, the RDSH releases a virtual IP address assigned to an RDS in response to a session deregistration request for the RDS. This application provides a schematic flowchart of session deregistration. Refer to FIG. 9. A deregistration process includes: The first client requests to deregister the connection RDP 1 between the first client and the RDSH. The RDSH receives the request, and deregisters a related resource of the first session RDS 1 associated with the RDP 1. The RDSH sends a DHCP request to release the IP address 1 associated with the RDS 1. The standalone DHCPD in the RDSH receives the request, and reclaims the IP address 1 for subsequent assignment to other connected RDPs. The RDSH disassociates the RDS 1 from the IP address 1 to complete session deregistration.

According to the technical solutions provided in this application, the cloud platform can apply to the management plane of the public cloud for an IP address for each RDSH, and maintain an IP address source (a plurality of IP addresses obtained through virtualization) assigned to each RDSH; in the RDSH of the public cloud, the standalone DHCPD is customized based on the DHCP, so that each RDSH can assign, reclaim, and reuse IP addresses; and in a same RDSH, when programs in different sessions listen to a network interface card port of an RDSH host, unique virtualized IP addresses are assigned to different sessions, to effectively avoid port listening conflicts caused by only one available IP address of the network interface card. In conclusion, the technical solutions of this application can effectively improve IP address assignment efficiency, and greatly improve scalability of providing a network service based on the RDSH.

Therefore, the IP address assignment method provided in this application can be applied to providing a public cloud service, and implementing remote desktop IP virtualization for the public cloud service, so that when a client accesses a session in an RDSH to use various network services provided by a cloud platform, security, privacy, and scalability of the network services can be fully ensured.

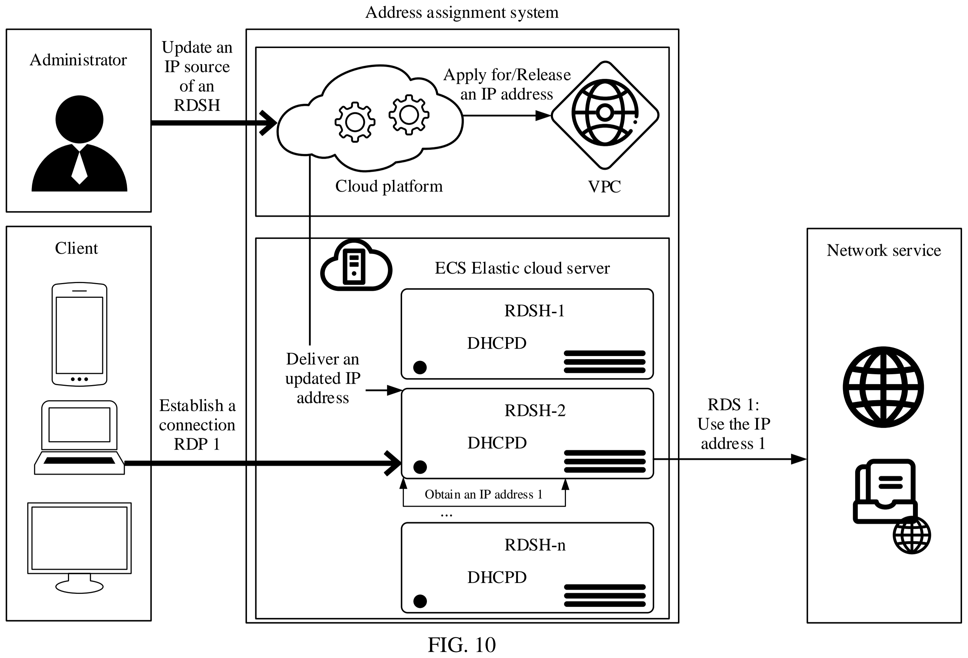

The foregoing embodiment describes a principle of how to deliver assignable virtualized IP addresses in a process of creating an RDSH, so that the RDSH can assign different IP addresses to different sessions. In some other embodiments, based on the foregoing embodiment, a virtualized IP address that has been assigned to an RDSH can be updated in a running process of the RDSH. FIG. 10 is a diagram of updating an IP address according to this application. The following provides descriptions with reference to FIG. 10, step 1001, and step 1002.

1001: In response to an IP update instruction, a cloud platform obtains, based on second specification information carried in the IP update instruction, an updated version of at least one IP address obtained through virtualization based on an IP address of the target RDSH.

The second specification information indicates at least one of the following: a quantity of updated IP addresses used by the target RDSH and a quantity of updated sessions supported by the target RDSH. For an example of the second specification information, refer to descriptions of the first specification information in step 302. Details are not described herein again.

In some embodiments, the cloud platform compares a first quantity currently available for the RDSH with a second quantity indicated by the second specification information, to determine a manner of updating a virtualized IP address assigned to the target RDSH. The quantity may be a quantity of sessions or a quantity of IP addresses.

In some embodiments, when the second quantity is less than the second quantity, it indicates that the cloud platform determines an IP address released this time, and obtains, based on the IP address released this time, the updated version of the at least one IP address obtained through virtualization. Based on this, the cloud platform can release redundant IP addresses in a timely manner. In some other embodiments, when the second quantity is greater than the first quantity, a virtualized IP address that is newly applied for this time is determined, and the updated version of at least one IP address obtained through virtualization is obtained based on the virtualized IP address that is newly applied for this time. Based on this, the cloud platform can supplement available IP addresses in a timely manner. In conclusion, real-time performance of IP resource management can be improved.

In some embodiments, a quantity of updated IP addresses obtained through virtualization is greater than or equal to an updated quantity of sessions corresponding to a product specification of the target RDSH.

Refer to FIG. 10. In response to an update request of the administrator, the cloud platform can determine, based on the foregoing comparison process, to apply to the VPC for a new IP address or request the VPC to release an IP address, and further determine an updated IP address of the target RDSH based on the newly applied IP address or the released IP address.

In some embodiments, the cloud platform supports passive update of an IP address of an RDSH. The cloud platform triggers the IP update instruction in response to obtaining the second specification information for the target RDSH from the management interface of the cloud platform.

In some embodiments, the cloud platform obtains the second specification information for the target RDSH from the management interface. In some application scenarios, because a product specification changes (for example, a quantity of used remote desktop sessions changes), to improve IP address utilization efficiency and ensure that a quantity of IP addresses supports a service requirement of a product, the administrator of the target RDSH updates an IP address used by the target RDSH. In this example, the administrator triggers the update process for the target RDSH on the management interface.

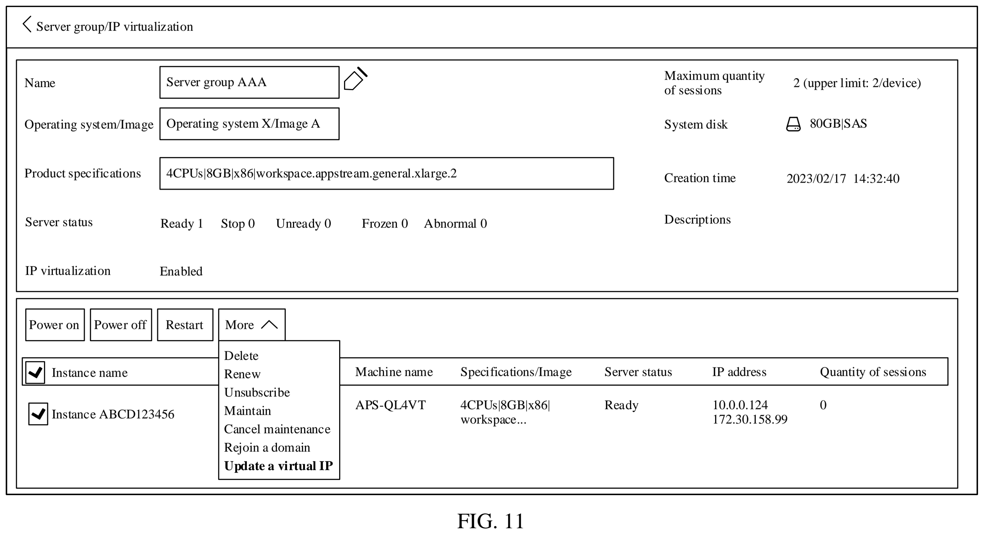

FIG. 11 is a diagram of another management interface according to this application. Refer to FIG. 11, an administrator logs in to a public cloud console (a management interface), and updates an IP source of a target RDSH. As shown in FIG. 11, the management interface displays a plurality of options for configuring an IP virtualization function of a current server group. The management interface displays information such as a name of a server group AAA configured to run the target RDSH, an operating system or image information used by the server group, specifications of the server group, a quantity of supported sessions, a capacity of a system hard disk, creation time, and a server status. Refer to FIG. 11. The IP virtualization function has been enabled for the server group configured to run the target RDSH. Refer to a management area of a target RDSH instance. An option to update a virtual IP is provided in a "More" option.

In some other embodiments, the cloud platform supports actively updating a virtualized IP address assigned to an RDSH. The cloud platform triggers the IP update instruction in response to detecting that usage of the target RDSH on the cloud platform meets an update condition. The update condition indicates IP address usage. For example, a quantity of used virtualized IP addresses on one or more RDSH hosts exceeds a first threshold, or a quantity of remaining available virtualized IP addresses on one or more RDSHs is less than a second threshold. In this case, the cloud platform automatically triggers additional assignment of virtualized IP addresses. Based on this, the cloud platform can dynamically maintain, based on usage, a quantity of virtualized IP addresses used by each host. This improves IP address utilization and maintains service availability.

The foregoing is a case in which the IP address of the target RDSH is updated. In some embodiments, the IP update instruction may be used for a plurality of RDSHs. In this case, the cloud platform can apply to the VPC for or release a virtualized IP address at a granularity of a standalone RDSH in the foregoing similar manner.

In the foregoing technical solution, an IP address source is dynamically updated for each RDSH, and an active update initiation manner and a passive update initiation manner are provided, so that scenarios such as a product change on a business side and availability maintenance on a service side can be covered, and RDSH-based deployment flexibility and network service availability are greatly improved.

1002: The cloud platform sends, to the target RDSH, the updated version of the at least one IP address obtained through virtualization.

In some embodiments, a server DHCPD that supports the dynamic host configuration protocol runs in the target RDSH.

In some embodiments, the standalone DHCPD in the target RDSH receives and stores the updated version of the at least one IP address obtained through virtualization, restarts DHCP protocol listening, and uses the updated version of the at least one IP address obtained through virtualization as an IP address source that can be used for assignment, to continue to provide a DHCP protocol support capability.

In some other embodiments, the standalone DHCPD in the target RDSH can update, based on the updated version of the IP address obtained through virtualization, a maintained IP address source online without restarting. For example, if detecting that a new IP address is added to updated versions of IP addresses obtained through virtualization, the DHCPD adds the newly added IP address to the maintained IP address source; or if detecting that updated versions of IP addresses obtained through virtualization do not include some maintained IP addresses, the DHCPD deletes the some IP addresses from the maintained IP address source. In some embodiments, the DHCPD detects usage of some IP addresses, and if the DHCPD detects, from a lease table, that the some IP addresses are not used, the DHCPD directly deletes the some IP addresses; or if the DHCPD detects, from the lease table, that the some IP addresses are in use, the DHCPD deletes the IP addresses after reclaiming the IP addresses.

According to the foregoing technical solution, a DHCPD deployed in a standalone manner is customized for each RDSH on a public cloud based on a DHCP protocol, and the DHCPD can dynamically assign, reclaim, or reuse an IP address in a standalone RDSH, and supports dynamic update of an IP address source. In this way, IP address utilization can be fully ensured, and when network services are provided based on the RDSH, virtualized IP addresses can be dynamically assigned, to improve scalability of public cloud services.

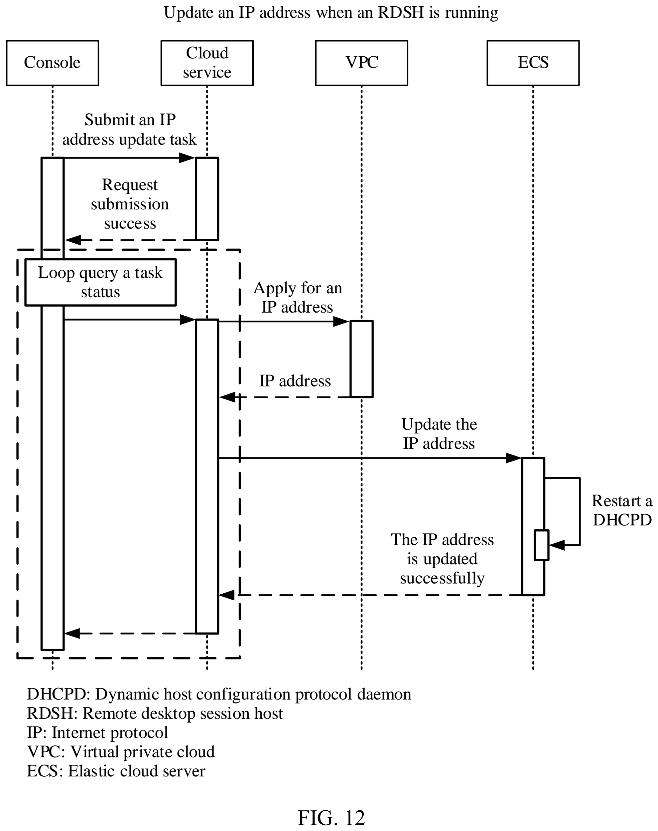

To facilitate understanding of the foregoing update process, this application provides a schematic flowchart of updating an IP address. Refer to FIG. 12. An example of an IP address update process includes the following step 1 to step 4:
1. An administrator logs in to a public cloud console (management interface), selects an RDSH whose IP address needs to be updated, and submits an IP address update task.
2. A cloud platform determines, based on an instruction submitted by a user, an existing IP address that is of a target RDSH and that is obtained through virtualization, and compares quantities (referring to step 1001), to determine to apply to a VPC management plane for adding or releasing a redundant IP address obtained through virtualization.
3. The cloud platform delivers, to a standalone DHCPD installed on the RDSH, updated versions of one or more IP addresses obtained through virtualization.
4. The standalone DHCPD receives and stores the updated versions of the IP addresses obtained through virtualization, restarts DHCP protocol listening, and uses the updated versions of the IP addresses obtained through virtualization as an IP address source that can be used for assignment, to continue to provide a DHCP protocol support capability.

The IP address assignment method provided in this application can be applied to a public cloud service, and can implement remote desktop IP virtualization for a public cloud, so that when different clients access an RDSH on a cloud platform, the RDSH assigns different IP addresses obtained through virtualization to different sessions corresponding to different clients, so that different clients can obtain network services based on different IP addresses. Therefore, when a client accesses a session in the RDSH to use various network services provided by the cloud platform, security, privacy, and scalability of the network services can be fully ensured.

Further, in the foregoing technical solution, for a function of updating an IP address, an active update initiation manner and a passive update initiation manner are provided for the RDSH, so that scenarios such as a product change on a business side and availability maintenance on a service side can be covered, IP address utilization efficiency is effectively improved, and it is ensured that a quantity of IP addresses meets a service requirement of a product.

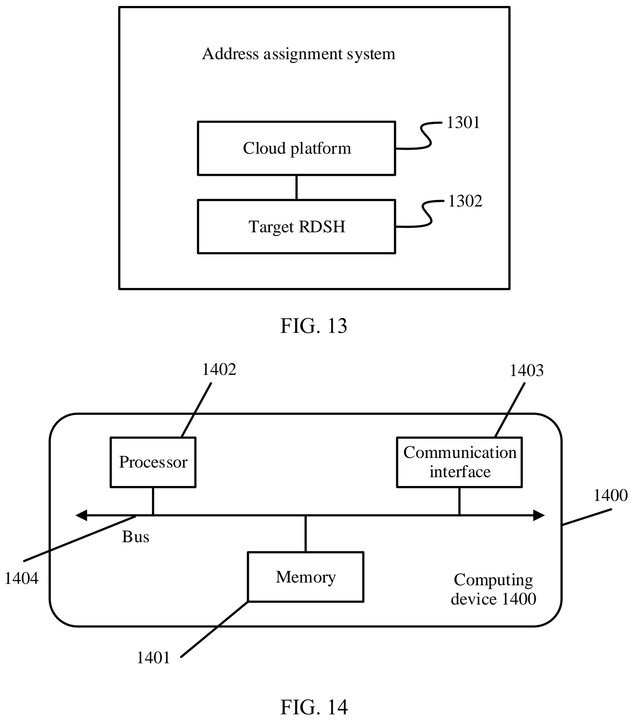

FIG. 13 is a diagram of an address assignment system according to an embodiment of this application. Refer to FIG. 13, the address assignment system includes a cloud platform and an RDSH. The cloud platform is configured to provide a public cloud service.

The cloud platform 1301 is configured to: receive a first creation request sent by a first client, and forward the first creation request to the target RDSH 1302, where the first creation request is used to request to establish a first session with the target RDSH 1302.

The target RDSH 1302 is configured to assign a corresponding first IP address to the first session in response to the first creation request, where the first IP address is obtained through virtualization of an IP address of the target RDSH 1302.

The target RDSH 1302 is configured to return the first IP address to the cloud platform 1301.

The cloud platform 1301 is configured to return a first access response to the first client, where the first access response indicates that the first client has established the first session with the target RDSH 1302 based on the first IP address.

In a possible implementation, the cloud platform 1301 is further configured to: receive a second creation request sent by a second client, and forward the second creation request to the target RDSH 1302, where the second creation request is used to request to establish a second session with the target RDSH 1302.

The target RDSH 1302 is further configured to assign a corresponding second IP address to the second session in response to the second creation request, where the second IP address is obtained through virtualization of an IP address of the target RDSH 1302.

The target RDSH 1302 is further configured to return the second IP address to the cloud platform 1301.

The cloud platform 1301 is further configured to return a second access response to the second client, where the second access response indicates that the second client has established the second session with the target RDSH 1302 based on the second IP address.

In a possible implementation, the cloud platform 1301 is further configured to provide a target function switch on a management interface, where the target function switch is used to enable and disable an IP virtualization function for the target RDSH 1302, and the IP virtualization function includes: enabling the RDSH to use a plurality of IP addresses obtained through virtualization based on IP addresses of the RDSH.

In a possible implementation, the cloud platform 1301 is further configured to: in response to obtaining first specification information for the target RDSH 1302 from the management interface of the cloud platform 1301, in a process of creating the target RDSH 1302, obtain, based on the first specification information, at least one IP address obtained through virtualization of an IP address of the target RDSH 1302, and send, to the target RDSH 1302, the at least one IP address obtained through virtualization, where the first specification information indicates at least one of the following: a quantity of IP addresses used by the target RDSH 1302 and a quantity of sessions supported by the target RDSH 1302.

The cloud platform 1301 is further configured to: in response to an IP update instruction, obtain, based on second specification information carried in the IP update instruction, an updated version of at least one IP address obtained through virtualization based on the target RDSH 1302, and send, to the target RDSH 1302, the updated version of the at least one IP address obtained through virtualization, where the second specification information indicates at least one of the following: a quantity of updated IP addresses used by the target RDSH 1302 and a quantity of updated sessions supported by the target RDSH 1302.

In a possible implementation, the cloud platform 1301 is configured to:
compare a first quantity currently available for the target RDSH 1302 with a second quantity indicated by the second specification information; and
when the second quantity is less than the first quantity, determine an IP address released this time, and obtain, based on the IP address released this time, the updated version of the at least one IP address obtained through virtualization based on an IP address of the RDSH; or
when the second quantity is greater than the first quantity, determine a virtualized IP address that is newly applied for this time, and obtain, based on the virtualized IP address that is newly applied for this time, the updated version of at least one IP address obtained through virtualization.

In a possible implementation, the cloud platform 1301 is configured to perform at least one of the following:
The cloud platform 1301 triggers the IP update instruction in response to obtaining the second specification information for the target RDSH 1302 from the management interface of the cloud platform 1301; and
the cloud platform 1301 triggers the IP update instruction in response to detecting that usage of the target RDSH 1302 on the cloud platform 1301 meets an update condition.

In a possible implementation, the target RDSH 1302 is further configured to:
in response to a deregistration request of the first client for the first session, release the first IP address assigned to the first session.

In a possible implementation, the target RDSH 1302 is further configured to:
in response to a network service request initiated by the first client through the first session, process the network service request based on the first IP address.

The cloud platform 1301 and the target RDSH 1302 are equivalent to functional modules deployed in the address assignment system, and both may be implemented by using software or hardware. For example, the following uses the cloud platform 1301 as an example to describe an implementation of the cloud platform 1301. Similarly, for an implementation of the target RDSH 1302, refer to the implementation of the cloud platform 1301.

According to the foregoing technical solution, remote desktop IP virtualization is implemented in a public cloud service, so that when a client accesses an RDSH on a cloud platform, the RDSH can assign an IP address to the client based on a plurality of IP addresses obtained through virtualization. In this way, different clients can use different IP addresses to obtain network services through a same RDSH, thereby ensuring security, privacy, and scalability of the network services.

Further, in the foregoing technical solution, for a function of updating an IP address, an active update initiation manner and a passive update initiation manner are provided for the RDSH, so that scenarios such as a product change on a business side and availability maintenance on a service side can be covered, IP address utilization efficiency is effectively improved, and it is ensured that a quantity of IP addresses meets a service requirement of a product.

The functional module is used as an example of a software functional unit, and the cloud platform 1301 may include code running on a computing instance. The computing instance may include at least one of a physical host (a computing device), a virtual machine, and a container. Further, there may be one or more computing instances. For example, the cloud platform 1301 may include code running on a plurality of hosts/virtual machines/containers. It should be noted that the plurality of hosts/virtual machines/containers used to run the code may be distributed in a same region (region) or different regions. Further, the plurality of hosts/virtual machines/containers used to run the code may be distributed in a same availability zone (availability zone, AZ) or different AZs. Each AZ includes one data center or a plurality of data centers that are geographically close to each other. Generally, one region may include a plurality of AZs.

Similarly, the plurality of hosts/virtual machines/containers used to run the code may be distributed on a same virtual private cloud (virtual private cloud, VPC) or a plurality of VPCs. Generally, one VPC is set in one region, and a communication gateway needs to be set in each VPC for cross-region communication between two VPCs in a same region and between VPCs in different regions. The VPCs are interconnected through the communication gateway.

The module is used as an example of a hardware functional unit, and the cloud platform 1301 may include at least one computing device, for example, a server. Alternatively, the cloud platform 1301 may be a device implemented by using an application-specific integrated circuit (application-specific integrated circuit, ASIC), a programmable logic device (programmable logic device, PLD), or the like. The PLD may be a complex programmable logic device (complex programmable logic device, CPLD), a field-programmable gate array (field-programmable gate array, FPGA), a generic array logic (generic array logic, GAL), or any combination thereof.

A plurality of computing devices included in the cloud platform 1301 may be distributed in a same region or different regions. The plurality of computing devices included in the cloud platform 1301 may be distributed in a same AZ or different AZs. Similarly, the plurality of computing devices included in the cloud platform 1301 may be distributed in a same VPC or a plurality of VPCs. The plurality of computing devices may be any combination of computing devices such as a server, an ASIC, a PLD, a CPLD, an FPGA, or GAL.

It should be noted that, in another embodiment, the cloud platform 1301 and the target RDSH 1302 may be configured to perform any step in the IP address assignment method, steps that the cloud platform 1301 and the target RDSH 1302 are responsible for implementing may be specified based on a requirement, and the cloud platform 1301 and the target RDSH 1302 separately implement different steps in the IP address assignment method, to implement all functions of the address assignment system. That is, when the address assignment system provided in the foregoing embodiment implements corresponding steps, division of the foregoing functional modules is merely used as an example for description. In actual application, the foregoing functions may be allocated to different functional modules for implementation based on a requirement, that is, an internal structure of an apparatus is divided into different functional modules, to complete all or some of the functions described above. In addition, the address assignment system provided in the foregoing embodiment and the IP address assignment method embodiment belong to a same idea. For a specific implementation process of the address assignment system, refer to the method embodiment. Details are not described herein again.

The following describes a hardware structure of a computing device in embodiments of this application.

An embodiment of this application provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

An embodiment of this application provides a computing device that can be configured as a computing device included in the foregoing computing device cluster. For example, FIG. 14 is a diagram of a hardware structure of a computing device according to an embodiment of this application. As shown in FIG. 14, a computing device 1400 includes a memory 1401, a processor 1402, a communication interface 1403, and a bus 1404. The memory 1401, the processor 1402, and the communication interface 1403 are communicatively connected to each other through the bus 1404.

The memory 1401 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, and the like), a magnetic disk storage medium or another magnetic storage device, or any other medium that can carry or store expected program code in a form of an instruction or a data structure and that can be accessed by a computer. This is not limited thereto. The processor 1402 implements the method in the foregoing or the following embodiments by reading program code stored in the memory 1401, or the processor 1402 implements the IP address assignment method in the foregoing or the following embodiments by using internally stored program code. When the processor 1402 implements the IP address assignment method in the foregoing or the following embodiments by reading the program code stored in the memory 1401, the memory 1401 stores program code used to implement the IP address assignment method provided in embodiments of this application.

The processor 1402 may be a network processor (network processor, NP), a central processing unit (central processing unit, CPU), an application-specific integrated circuit (application-specific integrated circuit, ASIC), or an integrated circuit configured to control program execution of the solutions of this application. The processor 1402 may be a single-core (single-CPU) processor, or may be a multi-core (multi-CPU) processor. There may be one or more processors 1402. The communication interface 1403 uses a transceiver module such as a transceiver, to implement communication between the computing device 1400 and another device or a communication network. For example, a request sent by a client may be obtained through the communication interface 1403.

The memory 1401 and the processor 1402 may be disposed separately, or may be integrated together.

The bus 1404 may include a path for transmitting information between components (for example, the memory 1401, the processor 1402, and the communication interface 1403) of the computing device 1400.

Memories in one or more computing devices in the computing device cluster may store the same instructions used to perform the IP address assignment method provided in this application. In some possible implementations, the memories in the one or more computing devices in the computing device cluster may alternatively store some instructions used to perform the IP address assignment method provided in this application. In other words, a combination of one or more computing devices may jointly execute instructions used to perform the IP address assignment method provided in this application.

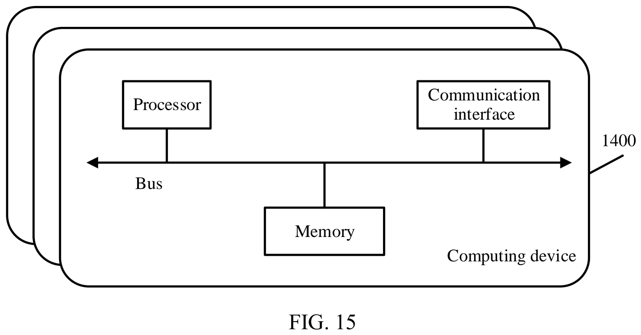

In some possible implementations, the one or more computing devices in the computing device cluster may be connected through a network. The network may be a wide area network, a local area network, or the like. FIG. 15 is a diagram of a computing device cluster according to an embodiment of this application. Refer to FIG. 15. One or more computing devices 1400 in the computing device cluster are connected through a network. For descriptions of the computing device 1400, refer to the foregoing descriptions. Details are not described herein again.

It should be noted that information (including but not limited to user equipment information, personal information of a user, and the like), data (including but not limited to data used for analysis, stored data, displayed data, and the like), and signals in this application are all authorized by a user or fully authorized by all parties, and collection, use, and processing of related data need to conform to related laws, regulations, and standards of related countries and regions. For example, information such as an IP address and a user credential in this application is obtained under full authorization.

In this application, terms such as "first" and "second" are used to distinguish between same items or similar items that have basically same functions. It should be understood that there is no logical or time sequence dependency between "first", "second", and "n^{th}", and a quantity and an execution sequence are not limited either. It should also be understood that although the following descriptions use terms such as "first" and "second" to describe various elements, these elements should not be limited by the terms. These terms are merely used to distinguish one element from another. For example, without departing from the scope of the various examples, a first IP address may be referred to as a second IP address, and similarly, a second IP address may be referred to as a first IP address. Both the first IP address and the second IP address may be IP addresses, and in some cases, may be separate and different IP addresses.

In this application, the term "at least one" means one or more, and the term "a plurality of" means two or more. For example, a plurality of IP addresses means two or more IP addresses.

The foregoing descriptions are merely specific implementations of this application, but are not intended to limit the protection scope of this application. Any equivalent modification or replacement readily figured out by persons skilled in the art within the technical scope disclosed in this application shall fall within the protection scope of this application. Therefore, the protection scope of this application shall be subject to the protection scope of the claims.

All or some of the foregoing embodiments may be implemented by using software, hardware, firmware, or any combination thereof. When software is used to implement embodiments, embodiments may be implemented completely or partially in a form of a program product. The program product includes one or more program instructions. When the program instructions are loaded and executed on a computing device, the procedures or functions according to embodiments of this application are all or partially generated.

Persons of ordinary skill in the art may understand that all or some of the steps of embodiments may be implemented by hardware or a program instructing related hardware. The program may be stored in a computer-readable storage medium. The storage medium may include a read-only memory, a magnetic disk, or an optical disc.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. An internet protocol IP address assignment method, wherein the method is applied to an address assignment system, the address assignment system comprises a cloud platform and a remote desktop session host RDSH, and the cloud platform is configured to provide a public cloud service; and the method comprises:
receiving, by the cloud platform, a first creation request sent by a first client, and forwarding the first creation request to a target RDSH, wherein the first creation request is used to request to establish a first session with the target RDSH;
assigning, by the target RDSH, a corresponding first IP address to the first session in response to the first creation request, wherein the first IP address is obtained through virtualization of an IP address of the target RDSH;
returning, by the target RDSH, the first IP address to the cloud platform; and
returning, by the cloud platform, a first access response to the first client, wherein the first access response indicates that the first client has established the first session with the target RDSH based on the first IP address.

2. The method according to claim 1, wherein the method further comprises:
receiving, by the cloud platform, a second creation request sent by a second client, and forwarding the second creation request to the target RDSH, wherein the second creation request is used to request to establish a second session with the target RDSH;
assigning, by the target RDSH, a corresponding second IP address to the second session in response to the second creation request, wherein the second IP address is obtained through virtualization of an IP address of the target RDSH;
returning, by the target RDSH, the second IP address to the cloud platform; and
returning, by the cloud platform, a second access response to the second client, wherein the second access response indicates that the second client has established the second session with the target RDSH based on the second IP address.

3. The method according to claim 1 or 2, wherein the method further comprises:
providing, by the cloud platform, a target function switch on a management interface, wherein the target function switch is used to enable and disable an IP virtualization function for the target RDSH, and the IP virtualization function comprises: enabling the RDSH to use a plurality of IP addresses obtained through virtualization based on IP addresses of the RDSH.

4. The method according to any one of claims 1 to 3, wherein the method further comprises:
in response to obtaining first specification information for the target RDSH from the management interface of the cloud platform, in a process of creating the target RDSH, obtaining, by the cloud platform based on the first specification information, at least one IP address obtained through virtualization of an IP address of the target RDSH, and sending, to the target RDSH, the at least one IP address obtained through virtualization, wherein the first specification information indicates at least one of the following: a quantity of IP addresses used by the target RDSH or a quantity of sessions supported by the target RDSH; and
in response to an IP update instruction, obtaining, by the cloud platform based on second specification information carried in the IP update instruction, an updated version of at least one IP address obtained through virtualization based on the target RDSH, and sending, to the target RDSH, the updated version of the at least one IP address obtained through virtualization, wherein the second specification information indicates at least one of the following: a quantity of updated IP addresses used by the target RDSH and a quantity of updated sessions supported by the target RDSH.

5. The method according to claim 4, wherein obtaining, by the cloud platform based on the second specification information carried in the IP update instruction, the updated version of the IP address of the target RDSH comprises:
comparing a first quantity currently available for the target RDSH with a second quantity indicated by the second specification information; and
when the second quantity is less than the first quantity, determining an IP address released this time, and obtaining, based on the IP address released this time, the updated version of the at least one IP address obtained through virtualization; or
when the second quantity is greater than the first quantity, determining a virtualized IP address that is newly applied for this time, and obtaining, based on the virtualized IP address that is newly applied for this time, the updated version of the at least one IP address obtained through virtualization.

6. The method according to claim 4 or 5, wherein the method further comprises at least one of the following:
triggering, by the cloud platform, the IP update instruction in response to obtaining the second specification information for the target RDSH from the management interface of the cloud platform; and
triggering, by the cloud platform, the IP update instruction in response to detecting that usage of the target RDSH on the cloud platform meets an update condition.

7. The method according to any one of claims 1 to 6, wherein the method further comprises:
in response to a deregistration request of the first client for the first session, releasing, by the target RDSH, the first IP address assigned to the first session.

8. The method according to any one of claims 1 to 7, wherein the method further comprises:
in response to a network service request initiated by the first client through the first session, processing, by the target RDSH, the network service request based on the first IP address.

9. An address assignment system, wherein the address assignment system comprises a cloud platform and a remote desktop session host RDSH, and the cloud platform is configured to provide a public cloud service;
the cloud platform is configured to: receive a first creation request sent by a first client, and forward the first creation request to a target RDSH, wherein the first creation request is used to request to establish a first session with the target RDSH;
the target RDSH is configured to assign a corresponding first IP address to the first session in response to the first creation request, wherein the first IP address is obtained through virtualization of an IP address of the target RDSH;
the target RDSH is configured to return the first IP address to the cloud platform; and
the cloud platform is configured to return a first access response to the first client, wherein the first access response indicates that the first client has established the first session with the target RDSH based on the first IP address.

10. The system according to claim 9, wherein the cloud platform is further configured to: receive a second creation request sent by a second client, and forward the second creation request to the target RDSH, wherein the second creation request is used to request to establish a second session with the target RDSH;
the target RDSH is further configured to assign a corresponding second IP address to the second session in response to the second creation request, wherein the second IP address is obtained through virtualization of an IP address of the target RDSH;
the target RDSH is further configured to return the second IP address to the cloud platform; and
the cloud platform is further configured to return a second access response to the second client, wherein the second access response indicates that the second client has established the second session with the target RDSH based on the second IP address.

11. The system according to claim 9 or 10, wherein the cloud platform is further configured to provide a target function switch on a management interface, wherein the target function switch is used to enable and disable an IP virtualization function for the target RDSH, and the IP virtualization function comprises: enabling the RDSH to use a plurality of IP addresses obtained through virtualization based on IP addresses of the RDSH.

12. The system according to any one of claims 9 to 11, wherein the cloud platform is further configured to: in response to obtaining first specification information for the target RDSH from the management interface of the cloud platform, in a process of creating the target RDSH, obtain, based on the first specification information, at least one IP address obtained through virtualization of an IP address of the target RDSH, and send, to the target RDSH, the at least one IP address obtained through virtualization, wherein the first specification information indicates at least one of the following: a quantity of IP addresses used by the target RDSH and a quantity of sessions supported by the target RDSH; and
the cloud platform is further configured to: in response to an IP update instruction, obtain, based on second specification information carried in the IP update instruction, an updated version of at least one IP address obtained through virtualization based on the target RDSH, and send, to the target RDSH, the updated version of the at least one IP address obtained through virtualization, wherein the second specification information indicates at least one of the following: a quantity of updated IP addresses used by the target RDSH and a quantity of updated sessions supported by the target RDSH.

13. The system according to claim 12, wherein that the cloud platform obtains, based on the second specification information carried in the IP update instruction, the updated version of the IP address of the target RDSH comprises:
comparing a first quantity currently available for the target RDSH with a second quantity indicated by the second specification information; and
when the second quantity is less than the first quantity, determining an IP address released this time, and obtaining, based on the IP address released this time, the updated version of the at least one IP address obtained through virtualization; or
when the second quantity is greater than the first quantity, determining a virtualized IP address that is newly applied for this time, and obtaining, based on the virtualized IP address that is newly applied for this time, the updated version of the at least one IP address obtained through virtualization.

14. The system according to claim 12 or 13, wherein the cloud platform is further configured to perform at least one of the following:
triggering the IP update instruction in response to obtaining the second specification information for the target RDSH from the management interface of the cloud platform; and
triggering the IP update instruction in response to detecting that usage of the target RDSH on the cloud platform meets an update condition.

15. The system according to any one of claims 9 to 14, wherein the target RDSH is further configured to:
in response to a deregistration request of the first client for the first session, release, for the target RDSH, the first IP address assigned to the first session.

16. The system according to any one of claims 9 to 15, wherein the target RDSH is further configured to:
in response to a network service request initiated by the first client through the first session, process, for the target RDSH, the network service request based on the first IP address.

17. A computing device cluster, comprising at least one computing device, wherein each computing device comprises a processor and a memory; and
a processor of the at least one computing device is configured to execute instructions stored in a memory of the at least one computing device, to cause the computing device cluster to perform the IP address assignment method according to any one of claims 1 to 8.

18. A computer-readable storage medium, comprising computer program instructions, wherein when the computer program instructions are executed by a computing device cluster, the computing device cluster performs the IP address assignment method according to any one of claims 1 to 8.

19. A computer program product comprising instructions, wherein when the instructions are run by a computing device cluster, the computing device cluster is caused to perform the IP address assignment method according to any one of claims 1 to 8.
